# EUROPEAN PATENT SPECIFICATION

(11) **EP 2 749 456 B1**
(45) Date of publication and mention of the grant of the patent: **26.04.2017**
(21) Application number: 12825234.3
(22) Date of filing: 08.06.2012
(51) Int. Cl.: B60R 21/00, G08G 1/16, B62D 15/02, B60R 1/00, B60K 37/06

(54) **PARKING ASSIST APPARATUS**
PARKHILFEVORRICHTUNG
APPAREIL D'AIDE AU STATIONNEMENT

(30) Priority: 23.08.2011 JP 2011181439
(43) Date of publication of application: 02.07.2014
(73) Proprietor: Nissan Motor Company, Limited, Kanagawa-ku Yokohama-shi Kanagawa 221-0023 (JP)
(72) Inventor: KIKUCHI, Masahiko, Atsugi-shi, Kanagawa 243-0123 (JP)
(74) Representative: Hoefer & Partner Patentanwälte mbB
(86) International application number: PCT/JP2012/064823
(87) International publication number: WO 2013/027466

(56) References cited:
- EP-A1- 2 113 426
- EP-A1- 2 135 779
- EP-A2- 1 270 330
- JP-A- 2000 043 744
- JP-A- 2003 045 269
- JP-A- 2003 175 852

## Description

### TECHNOLOGICAL FIELD

The present invention relates to a parking assist apparatus that assists parking based on a selected parking pattern.

The present application claims priority to Japanese Patent Application No. 2011-181439 filed August 23, 2011.

### BACKGROUND TECHNOLOGY

With respect to this type of apparatus, there is known an apparatus in which a menu of a plurality of parking patterns such as adjacent parking to the right or to the left, or parallel parking to the right or to the left is displayed as an image on a touch panel display so as to select a parking pattern (Patent Document 1), Furthermore, EP 1 270 330 A2 is considered as the closest prior art and discloses a parking assisting device, comprising: a mode selector switch for selecting a first mode of executing a parking assist function to a vehicle based on a prescribed parking mode or a second mode of executing a function of the vehicle other than the first mode; direction switches including a pair of front and rear direction switches disposed at the front and rear; and a parking pattern selecting unit that determines an arrangement of parking the vehicle that is adjacent parking or parallel parking associated with the front or rear position of the front and rear direction switches when one of the front and rear direction switches is operated so as to select a parking pattern based on the arrangement of parking the vehicle that have been determined in a case in which the first mode is selected.

### PRIOR ART DOCUMENTS

### PATENT DOCUMENTS

Patent Document 1: Japanese Laid-open Patent Publication No. 2010-208483

### DISCLOSURE OF THE INVENTION

### PROBLEMS TO BE SOLVED BY THE INVENTION

However, in the conventional apparatus, there is a problem in that the apparatus can be applied only to a vehicle equipped with a touch panel display.

An object of the present invention is to provide an apparatus that assists parking by selecting a parking pattern corresponding to the situation from a plurality of parking patterns such as adjacent parking to the right or to the left, or parallel parking to the right or to the left for a vehicle that is not equipped with a touch panel display.

### MEANS USED TO SOLVE THE PROBLEMS

In order to solve the above-described problem, the present invention includes a mode selector switch for selecting a first mode of a parking assist function or a second mode of executing an in-vehicle function of either driving a door mirror, or opening or closing a door window, and direction switches including a pair of right and left direction switches disposed on the right and left and a pair of front and rear direction switches disposed at the front and rear. In the first mode, when one of the right and left direction switches is operated, a parking direction associated with the right or left position of the right and left direction switches is determined, and when one of the front and rear direction switches is operated, an arrangement of parking a vehicle that is adjacent parking or parallel parking associated with the front or rear position is determined, so that a parking pattern is selected based on the parking direction and the arrangement of parking the vehicle.

### EFFECT OF THE INVENTION

According to the present invention, a different parking pattern can be selected by operating any one of the direction switches disposed in different positions. Therefore, parking assist can be performed by selecting a parking pattern in a vehicle that is not equipped with a touch panel display for displaying a plurality of parking patterns.

### BRIEF DESCRIPTION OF THE DRAWINGS

[FIG. 1] is a diagram that shows a configuration example of an input device of a parking assist apparatus of the present embodiment according the present invention.
[FIG. 2] is a diagram that shows an input device of a parking assist apparatus of a first embodiment.
[FIG. 3] is a flow chart that shows a control procedure for the parking assist apparatus of the first embodiment.
[FIG. 4] is a diagram that shows an input device of a parking assist apparatus of a second embodiment.
[FIG. 5] is a flow chart that shows a control procedure for the parking assist apparatus of the second embodiment.

### PREFERRED EMBODIMENTS OF THE INVENTION

### <First embodiment >

Hereinafter, a first embodiment of the present invention will be explained with reference to the drawings. In the present embodiment, a case in which a parking assist apparatus according to the present invention is applied to a parking assist apparatus 100 that can be switched between a first mode of executing a parking assist function and a second mode of executing a door mirror drive function will be explained as an example. The parking assist apparatus 100 is a computer that has a ROM (Read Only Memory) in which a program for assisting parking into a selected parking space is stored, a CPU (Central Processing Unit) as an operation circuit serving as the parking assist apparatus 100 by executing the program stored in this ROM, and a RAM (Random Access Memory) serving as an accessible storage device.

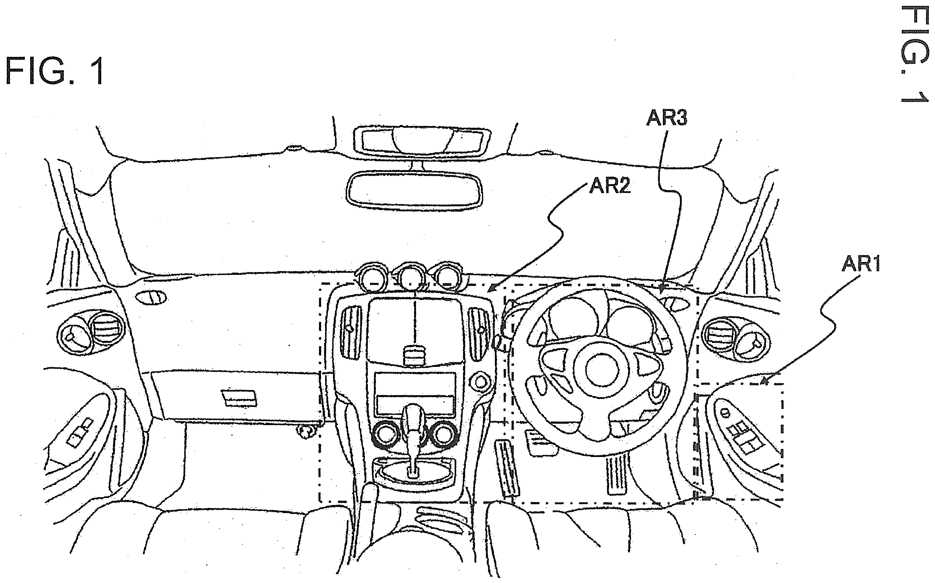

Fig. 1 is a diagram that shows an area in which an input device 10A of the parking assist apparatus 100 according to the present embodiment is disposed. The input device 10A of the present embodiment receives a command to the parking assist apparatus and a command to a door mirror drive apparatus. As shown in Fig. 1, the input device 10A is disposed in an area AR1 of an inner wall on an interior side of a side door of a driver's seat. Since the area AR1 is an area that a seated driver can easily reach with a hand, an input operation by the driver can be facilitated by disposing the input device 10A in the area AR1. However, the area for disposing the input device 10A is not limited, and the input device 10A can be disposed in an area AR2 on a cluster lid shown by a broken line of Fig. 1, an area A3 in the vicinity of a handle, a center console that is not shown in the drawing, or the like.

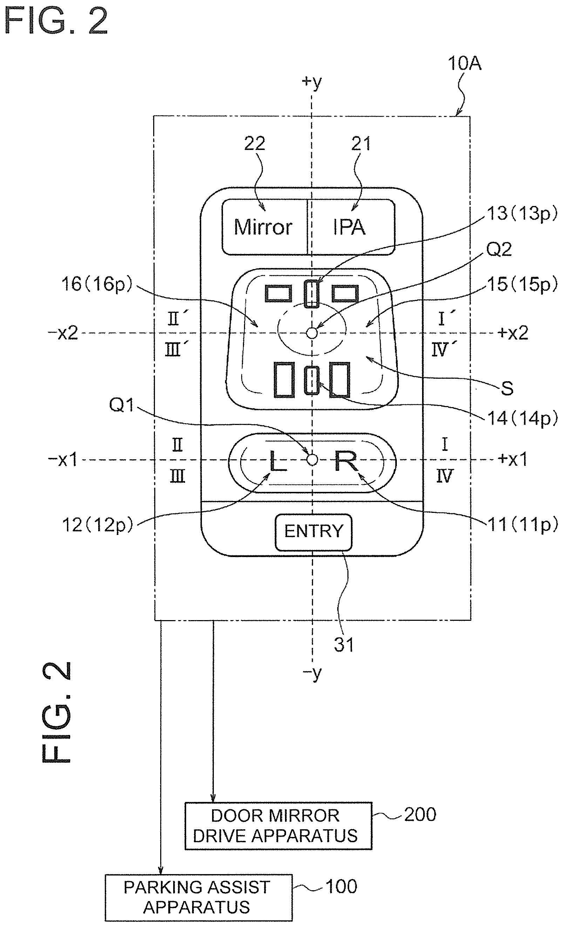

Fig. 2 is a diagram that shows the input device 10A of the parking assist apparatus 100 according to the present embodiment. As shown in Fig. 2, the input device 10A of the parking assist apparatus 100 of the present embodiment is connected to a door mirror drive apparatus 200 or other in-vehicle apparatuses installed in the vehicle as well as the parking assist apparatus 100 by a CAN (Controller Area Network) or other in-vehicle LANs so as to transmit or receive information. Although the parking assist apparatus 100 and the input device 10A are illustrated independently in Fig. 2, the input device 10A has mode selector switches and direction switches of the parking assist apparatus 100.

The parking assist apparatus 100 of the present embodiment is an apparatus that obtains information (such as an operation procedure or an operation amount of the vehicle) for assisting a parking operation corresponding to a parking pattern based on the position relation between the vehicle to be parked and a parking space, and outputs this information to a drive control apparatus of the vehicle or presents this information to the driver.

Also, the door mirror drive apparatus 200 of present embodiment is an apparatus that has a door mirror drive function of folding in door mirrors provided on a side door on a driver's seat side and a side door on a passenger's seat side in a vehicle toward the vehicle or folding out the door mirrors in a direction away from the vehicle body, or a door mirror drive function of changing the direction of the mirror of the door mirror toward a road surface or toward the sky (the opposite side of the road surface side).

Although it is not shown in the drawing, the input device 10A of the parking assist apparatus 100 of the present embodiment can be connected to a door window opening and closing apparatus, a power seat drive apparatus, or other in-vehicle apparatuses installed in the vehicle so as to transmit or receive information. Incidentally, the door window opening and closing apparatus is an apparatus that has a function of raising and lowering a window member of a side door on a driver's seat side, a side door on a passenger's seat side, a side door of the rear seat on the driver's seat side, or a side door of the rear seat on the passenger's seat side in a vehicle. The power seat drive apparatus is an apparatus that has a function of changing the position of the driver's seat in the longitudinal direction, the position of the seat in the height direction, the angle of the backrest of the seat, or the angle of the seat surface of the seat.

As shown in Fig. 2, mode selector switches 21, 22, direction switches 11 - 16, and an entry switch 31 are provided on an operating surface S of the input device 10A of the present embodiment. The operating surface S on which each of these switches is provided is formed along a plane that has x and y components including an origin Q1 and an origin Q2.

Here, the plane that has x and y components along which the operating surface S of the input device 10A is formed is a concept defined for showing the position relation among the mode selector switches 21, 22, the direction switches 11 - 16, and the entry switch 31.

The shape of the operating surface S on which the mode selector switches 21, 22, the direction switches 11 - 16, and the entry switch 31 are provided is not limited to a specific one, and it can be formed as a flat surface or can be formed as a curved surface. The operating surface S of the input device 10A shown in Fig. 2 includes a convex area and a concave area that have partially different heights, and each region is formed as a curved surface or as a flat surface.

Hereinafter, each switch provided on the operating surface S will be explained.

First, the mode selector switches 21, 22 will be explained. The mode selector switches 21, 22 of the input device 10A of the parking assist apparatus 100 of the present embodiment select a first mode of assisting parking of a vehicle corresponding to a prescribed parking mode or a second mode of executing a function of the vehicle other than parking assist.

As shown in Fig. 2, the input device 10A of the present embodiment has a first selector switch (IPA switch, IPA: Intelligent Parking Assist) for operating the first mode by the parking assist apparatus 100, and a second selector switch (Mirror switch) for operating the second mode by the door mirror drive apparatus 200. When the first selector switch (IPA switch) is pressed, the first mode is selected and a signal input to each switch is transmitted to the parking assist apparatus 100. On the other hand, the second selector switch (Mirror switch) is pressed, the second mode is selected and a signal input to each switch is transmitted to the door mirror drive apparatus 200.

Next, the direction switches 11 - 16 will be explained. The direction switches 11 - 16 of the present embodiment include a pair of right and left direction switches disposed on the right and left, and a pair of front and rear direction switches disposed at the front and rear. In the present embodiment, in a case in which the first mode (function of parking assist) is selected by the above-described mode selector switches 21, 22, when one of the right and left direction switches is operated, a parking direction associated with the right or left position of the right and left direction switches can be selected, and when one of the front and rear direction switches is operated, an adjacent or parallel parking pattern associated with the front or rear position of the front and rear direction switches can be selected.

More specifically, the input device 10A of the present embodiment has the right and left direction switches (11, 12) and the front and rear direction switches (13, 14) disposed on the operating surface S along a plane that has x and y components including an origin Q shown in Fig. 2. The right and left direction switches (11, 12) receive a right or left command indicating + x1 direction (rightward direction) or - x1 direction (leftward direction) of x1 and -y components (x1 axis and y axis) including the origin Q1. The front and rear direction switches (13, 14) receive a front or rear command indicating + y1 direction (forward direction) or - y1 direction (rearward direction) of x2 and -y components (x2 axis and y axis) including the origin Q2.

The input switch 10A of the present embodiment shown in Fig. 2 has two independent switch members including the right and left direction switches (11, 12) disposed based on the coordinate of x1 and -y passing through the first origin Q1 and the front and rear direction switches (13, 14) disposed based on the coordinate of x2 and -y passing through the second origin Q2. The right and left direction switches (11, 12) receive a right or left command to select + x1 direction or - x1 direction (rightward or leftward), and the front and rear direction switches (13, 14) receive a front or rear command to select + y1 direction or - y1 direction (forward or rearward).

More specifically, as shown in Fig. 2, the right and left direction switches (11, 12) of the present embodiment include the right and left direction switch 11 ("R" button) having a right contact point 11p provided in a right area that corresponds to a first quadrant (I) or a fourth quadrant (IV) of the coordinate of x1 and -y based on the first origin Q1, and the right and left direction switch 12 ("L" button) having a left contact point 12p provided in a left area that corresponds to a second quadrant (II) or a third quadrant (III) of the coordinate of x1 and -y based on the first origin Q1.

When the right and left direction switch 11 displayed as "R" is operated, a parking pattern to the right (in the + x1 direction in Fig. 2) can be selected. When the right and left direction switch 12 displayed as "L" is operated, a parking pattern to the left (in the - x1 direction in Fig. 2) can be selected. Here, the + y1 direction in the drawing is a travelling direction of the vehicle.

Also, as shown in the same drawing, the front and rear direction switches (13, 14) of the present embodiment include the front and rear direction switch 13 (forward arrow button) having a front contact point 13p provided in a front area that corresponds to a first quadrant (I') or a second quadrant (II') of the coordinate of x2 and -y based on the second origin Q2, and the front and rear direction switch 14 (rearward arrow button) having a rear contact point 14p provided in a rear area that corresponds to a third quadrant (III') or a fourth quadrant (IV') of the coordinate of x2 and -y based on the second origin Q2.

When the front and rear direction switch 13 having the arrow indicating forward (in the +y direction in Fig. 2) is operated, an adjacent or parallel arrangement of parking the vehicle associated with the front direction is selected. When the front and rear direction switch 14 (in the -y direction in Fig. 2) is operated, an adjacent or parallel arrangement of parking the vehicle associated with the rear direction is selected.

In the parking assist apparatus 100 of the present embodiment, when one of the right and left direction switches 11, 12 is operated, a parking direction associated with the right or left position of the right and left direction switches 11, 12 is determined, and when one of the front and rear direction switches 13, 14 is operated, an adjacent or parallel arrangement of parking the vehicle associated with the front or rear position of the front and rear direction switches 13, 14 is determined. Then, the parking assist apparatus 100 selects a parking pattern based on the parking direction and the arrangement of parking the vehicle that have been determined.

Incidentally, the parking pattern of the present embodiment includes at least a right adjacent parking pattern for parking a vehicle in an area located on the right side of the vehicle so as to be laterally lined up with another parked vehicle (parking space), a left adjacent parking pattern for parking a vehicle in an area located on the left side of the vehicle so as to be laterally lined up with another parked vehicle (parking space), a right parallel parking pattern for parking a vehicle in an area located on the right side of the vehicle so as to be longitudinally lined up with another parked vehicle (parking space), and a left parallel parking pattern for parking a vehicle in an area located on the left side of the vehicle so as to be longitudinally lined up with another parked vehicle (parking space).

In the present embodiment, in a state in which the first mode (parking assist function) is selected, when the right contact point 11P of the right and left direction switch 11 is operated and the front contact point 13P of the front and rear direction switch 13 is operated, the right adjacent parking pattern is selected, and when the right contact point 11P of the right and left direction switch 11 is operated and the rear contact point 14P of the front and rear direction switch 13 is operated, the right parallel parking pattern is selected. Similarly, when the left contact point 12P of the right and left direction switch 11 is operated and the front contact point 13P of the front and rear direction switch 13 is operated, the left adjacent parking pattern is selected, and when the left contact point 12P of the right and left direction switch 11 is operated and the rear contact point 14P of the front and rear direction switch 13 is operated, the left parallel parking pattern is selected.

More specifically, in operation of the first mode, when the right and left direction switch 11 having the right contact point 11p is operated, a parking pattern corresponding to the right parking pattern is considered as a parking pattern that the driver wishes, and when the right and left direction switch 12 having the left contact point 12p is operated, a parking pattern corresponding to the left parking pattern is considered as a parking pattern that the driver wishes.

In this manner, the operation positions of the right and left direction switches 11, 12 disposed on the right and left with respect to the y axis passing through the origin Q1 are associated with the right or left parking pattern. Accordingly, the driver can intuitively associate the parking direction of the vehicle with the parking pattern so as to accurately select the parking pattern.

Also, the operation positions of the front and rear direction switches 13, 14 disposed at the front and rear with respect to the x axis passing through the origin Q2 are associated with the adjacent or parallel parking pattern. Accordingly, the driver can intuitively associate the adjacent and parallel parking patterns of the vehicle with the positions of the switches so as to accurately select the parking pattern. Apparently, the adjacent parking and the parallel parking can be associated with either one of the front and rear direction switches 13, 14.

As described above, the adjacent parking pattern may be assigned to (associated with) the front contact point 13p, or the parallel parking pattern may be assigned to the front contact point 13p. However, in order to allow the driver to observe which one of the adjacent parking pattern and the parallel parking pattern is assigned to each of the contact points 13p, 14p, figures showing the position relation between the vehicle and the parking space can be displayed on the front and rear direction switches 13, 14. For example, as shown in Fig. 2, the vehicle (rectangle in the center) and the parking spaces (rectangles on both sides) lined up on both sides of the vehicle in a perpendicular direction can be displayed on a pressed portion of the front and rear direction switch 13. This display can visually show that the adjacent parking is assigned to the contact point 13p of the front and rear direction switch 13. Also, the vehicle (rectangle in the center) and the parking spaces (rectangles on both sides) lined up on both sides of the vehicle in the same direction can be displayed on a pressed portion of the front and rear direction switch 14. This display can visually show that the parallel parking is assigned to the contact point 14p of the front and rear direction switch 14. The display showing the adjacent parking pattern or the parallel parking pattern can be lighted up in operation of the first mode.

Further, in the present embodiment, the direction switches 15, 16 may be additionally provided. The direction switches 15, 16 have a right contact point 15p and a left contact point 16p.

When the direction switch 15 having an arrow indicating rightward is pressed, a parking pattern for parking a vehicle in a large parking space associated with the right side (in the + x2 direction in Fig. 2) is selected, and when the direction switch 16 having an arrow indicating leftward is pressed, a parking pattern for parking a vehicle in a small parking space associated with the left side (in the - x2 direction in Fig. 2) is selected. In the present embodiment, a parking pattern in a case of parking a vehicle in a large parking space is associated with the direction switch 15 having the right contact point 15p, and a parking pattern in a case of parking a vehicle in a small parking space is associated with the direction switch 16 having the left contact point 16p. Consequently, since the contrasting spaces are associated with the contrasting directions, the driver can intuitively select the parking pattern for a large or small space. Apparently, the case of parking in a large space and the case of parking in a small space may be associated with either one of the direction switches 15, 16.

On the other hand, in a case in which the second mode is selected to control the door mirror drive apparatus 200, a function of driving a door mirror of the vehicle is executed. In the second mode, when either one of the right and left direction switches 11, 12 on the right and left is operated, the door mirror drive apparatus 200 determines a right or left operation target door mirror associated with the right or left position of the right and left direction switch 11, and when either one of the front and rear direction switches 13, 14 at the front and rear is operated, the door mirror drive apparatus 200 determines a driving direction to incline the door mirror forward or rearward associated with the front or rear position of the front and rear direction switches 13, 14. Then, the door mirror drive apparatus 200 drives the determined operation target door mirror in the determined direction. Here, with respect to the drive control of the door mirror, a technique known at the time of filing the present application can be appropriately used.

The entry switch 31 is a switch to be operated in order to enter the content of a parking pattern selection signal or a door mirror drive control signal based on each command input to the mode selector switches 21, 22 and the direction switches 11-16. The parking assist apparatus 100 executes a selection process of the parking pattern after the entry switch 31 is operated.

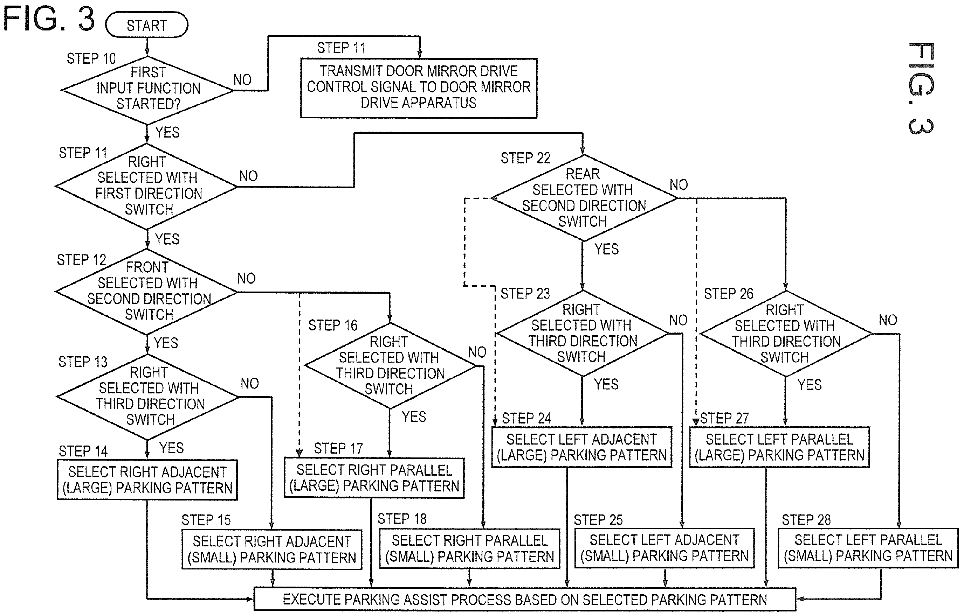

Next, a control procedure for the parking assist apparatus 100 of the present embodiment will be explained with reference to the flow chart of Fig. 3. Here, a selection process of the parking mode will be mainly explained.

First, in step 10, when the mode selector switch 21, which is an IPA switch, is pressed, the first mode is selected, the parking assist process of the parking assist apparatus 100 is started, and the process proceeds to step 11.

In step 11, in a case in which the right and left direction switch 11 (R switch) is pressed and the right parking direction is determined, the process proceeds to step 12. On the other hand, in a case in which the right and left direction switch 12 (L switch) is pressed and the left parking direction is determined, the process proceeds to step 22.

In step 12, in a case in which the front and rear direction switch 13 is pressed and the parking arrangement of the vehicle is determined to be adjacent, the process proceeds to step 13. On the other hand, in a case in which the front and rear direction switch 14 is pressed and the parking arrangement of the vehicle is determined to be parallel, the process proceeds to step 16.

In step 13, in a case in which the direction switch 15 is pressed and the parking space is determined to be large, the process proceeds to step 14. Then, in step 14, the parking assist apparatus 100 selects a right adjacent parking pattern in a parking space that is sufficiently large with respect to the size of the vehicle.

On the other hand, in step 13, in a case in which the direction switch 16 is pressed and the parking space is determined to be small, the process proceeds to step 15. In step 15, the parking assist apparatus 100 selects a right adjacent parking pattern in a parking space that is small with respect to the size of the vehicle.

Also, in step 16, in a case in which the direction switch 15 is pressed and the parking space is determined to be large, the process proceeds to step 17. In step 17, the parking assist apparatus 100 selects a right parallel parking pattern in a parking space that is sufficiently large with respect to the size of the vehicle.

On the other hand, in step 16, in a case in which the direction switch 16 is pressed and the parking space is determined to be small, the process proceeds to step 18. In step 18, the parking assist apparatus 100 selects a right parallel parking pattern in a parking space that is small with respect to the size of the vehicle.

Back to step 11, in a case in which the right and left direction switch 12 (L switch) is pressed, the process proceeds to step 22. In a case in which the front and rear direction switch 13 is pressed and the parking arrangement of the vehicle is determined to be adjacent, the process proceeds to step 23. On the other hand, in a case in which the front and rear direction switch 14 is pressed and the parking arrangement of the vehicle is determined to be parallel, the process proceeds to step 26.

In step 23, in a case in which the direction switch 15 is pressed and the parking space is determined to be large, the process proceeds to step 24. In step 24, the parking assist apparatus 100 selects a left adjacent parking pattern in a parking space that is sufficiently large with respect to the size of the vehicle.

On the other hand, in step 23, in a case in which the direction switch 16 is pressed and the parking space is determined to be small, the process proceeds to step 25. In step 25, the parking assist apparatus 100 selects a left adjacent parking pattern in a parking space that is small with respect to the size of the vehicle.

Also, in step 26, in a case in which the direction switch 15 is pressed and the parking space is determined to be large, the process proceeds to step 27. In step 27, the parking assist apparatus 100 selects a left parallel parking pattern in a parking space that is sufficiently large with respect to the size of the vehicle.

On the other hand, in step 26, in a case in which the direction switch 16 is pressed and the parking space is determined to be small, the process proceeds to step 28. In step 28, the parking assist apparatus 100 selects a left parallel parking pattern in a parking space that is small with respect to the size of the vehicle.

Here, without going through step 13, 16, 23, or 26, the process can move from step 12 to step 14 or 17, or can move from step 22 to step 24 or 27. In such cases, four parking patterns including right and left adjacent parking, and right and left parallel parking can be selected.

Finally, in step 30, the input device 10 transmits a parking pattern selection signal to the parking assist apparatus 100, and the parking assist apparatus 100 executes the parking assist process corresponding to the selected parking pattern.

Back to step 10, when the mode selector switch 22 that is a mirror switch is pressed instead of the IPA switch, the process proceeds to step 11. In step 11, a door mirror drive control signal received by the right and left direction switches 11, 12, the front and rear direction switches 13, 14, and the direction switches 15, 16 is transmitted to the door mirror drive apparatus 200. The right and left direction switches 11, 12 select a door mirror on the right or left as the control target. The front and rear direction switches 13, 14 select the operation direction or the operation amount of the mirror surface of the door mirror. The direction switches 15, 16 select the operation of folding in the door mirror or the operation of folding out the door mirror, and the amount of these operations. The door mirror drive apparatus 200 controls the operation of the door mirror drive mechanism based on the signal input to each of the switches 11 - 16. A technique known at the time of filing the present application can be used for the door mirror drive mechanism and the door mirror drive method.

The parking assist apparatus 100 of the present embodiment that is configured and operated as described above has the input device 10A provided with the direction switches 11 - 16 to receive a command to select a parking pattern including information regarding the direction such as adjacent parking to the right or left or parallel parking to the right or left with respect to the parking assist apparatus 100, and receive a command with respect to the door mirror drive apparatus 200. Therefore, a parking pattern can be selected even if the vehicle is not equipped with a touch panel display.

Also, since commands to a plurality of in-vehicle apparatuses can be received by the mode selector switches 21, 22, switches for other in-vehicle apparatuses of the vehicle can be shared as the switches for the parking assist apparatus. Therefore, there is no need to provide new switches only for the parking assist apparatus. As a result of this, the cost can be reduced in a case of installing the parking assist apparatus to a vehicle.

More specifically, in the parking assist apparatus 100 of the present embodiment, the existing switches of the vehicle such as the switches of the door mirror drive apparatus 200 or the switches of other in-vehicle apparatuses can be shared as the switches for the parking assist apparatus 100. Therefore, there is no need to provide new switches only for the parking assist apparatus 100. As a result of this, since there is no need to change the layout or design of operation devices disposed in the vicinity of the driver's seat, the cost can be reduced in a case of installing the parking assist apparatus 100 to a vehicle. Also, the direction switches 11, 12 are disposed on the right and left such that the right or left parking pattern associated with the position of the direction switches 11, 12 can be selected in the first mode and the right or left door mirror associated with the position of the direction switches 11, 12 can be selected in the second mode. Accordingly, the driver can intuitively associate the right and left parking patterns of the vehicle with the positions of the switches, and can associate the positions of the right and left door mirrors as the operation target with the positions of the switches. Therefore, the driver can accurately select the parking pattern. As a result of this, the parking assist apparatus 100 that can conduct input of high operability adapted to the sense or recognition of human beings can be provided.

Further, an ON signal received by the front contact point 13p disposed on the front side with respect to the x axis passing through the origin Q2 is associated with adjacent parking, and an ON signal received by the rear contact point 14p disposed on the rear side with respect to the x axis passing through the origin Q2 is associated with parallel parking. In this manner, adjacent parking and parallel parking considered as contrasting concepts can be associated with the contrasting directions. Accordingly, the driver can intuitively associate the adjacent and parallel parking patterns of the vehicle with the positions of the switches. Therefore, the driver can accurately select the parking pattern. The same effect can be achieved when adjacent parking and parallel parking are associated in an opposite manner. As a result of this, the parking assist apparatus 100 that can conduct input of high operability adapted to the sense or recognition of human beings can be provided.

### <Second embodiment >

Hereinafter, a second embodiment of the present invention will be explained with reference to the drawings. In the present embodiment, a case in which the parking assist apparatus according to the present invention is applied to the parking assist apparatus 100 that can be switched between a first mode of executing a parking assist function and a second mode of executing a door window opening and closing function will be explained as an example.

An input device 10B of the present embodiment receives a command to the parking assist apparatus and a command to a door window opening and closing apparatus. In the same manner as in the first embodiment, the input device 10B of the present embodiment is disposed in the area AR1 of the inner wall on the interior side of the side door of the driver's seat, the area AR1, or the area A3 shown in Fig. 1.

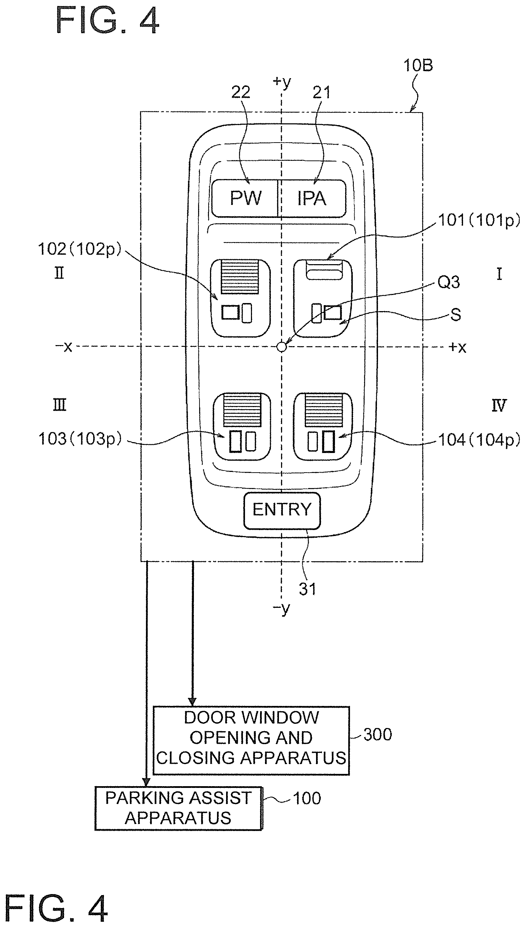

Fig. 4 is a diagram that shows the input device 10B of the parking assist apparatus 100 according to the present embodiment. As shown in Fig. 4, the input device 10B of the present embodiment is connected to a door window opening and closing apparatus 300 or other in-vehicle apparatuses installed in the vehicle as well as the parking assist apparatus 100 by a CAN (Controller Area Network) or other in-vehicle LANs so as to transmit or receive information.

The parking assist apparatus of the present embodiment is an apparatus that obtains information (such as an operation procedure or an operation amount of the vehicle) for assisting a parking operation corresponding to a parking pattern based on the position relation between the vehicle to be parked and a parking space, and outputs this information to a drive control apparatus of the vehicle or presents this information to the driver.

Also, the door window opening and closing apparatus of the present embodiment is an apparatus that has a door window opening and closing function of raising and lowering a window member of the side door on the driver's seat side, the side door on the passenger's seat side, the side door of the rear seat on the driver's seat side, or the side door of the rear seat on the passenger's seat side. Incidentally, a power seat drive apparatus is an apparatus that has a function of changing the position of the driver's seat in the longitudinal direction, the position of the seat in the height direction, the angle of the backrest of the seat, or the angle of the seat surface of the seat.

Although it is not shown in the drawing, the input device 10B of the parking assist apparatus 100 of the present embodiment can be connected to the door mirror drive apparatus, the power seat drive apparatus, or other in-vehicle apparatuses installed in the vehicle so as to transmit or receive information.

As shown in Fig. 4, the mode selector switches 21, 22, direction switches 101 - 104, and the entry switch 31 are provided on an operating surface S of the input device 10B of the present embodiment. The operating surface S on which each of these switches is provided is formed along a plane that has x and y components including an origin Q3.

Here, the plane that has x and y components along which the operating surface S of the input device 10B is formed is a concept defined for showing the position relation among the mode selector switches 21, 22, the direction switches 101 - 104, and the entry switch 31.

The shape of the operating surface S on which the mode selector switches 21, 22, the direction switches 101 - 104, and the entry switch 31 are provided is not limited to a specific one, and it can be formed as a flat surface or can be formed as a curved surface. The operating surface S of the input device 10B shown in Fig. 4 includes a convex area and a concave area that have partially different heights, and each region is formed as a curved surface or as a flat surface.

Hereinafter, each switch provided on the operating surface S will be explained.

First, the mode selector switches 21, 22 will be explained. The mode selector switches 21, 22 of the input device 10B of the parking assist apparatus 100 of the present embodiment select the first mode of assisting parking of a vehicle corresponding to a prescribed parking mode or the second mode of executing a function of the vehicle other than parking assist.

As shown in Fig. 4, the input device 10B of the present embodiment has a first mode selector switch (IPA switch, IPA: Intelligent Parking Assist) for operating the first mode of executing the parking assist process of the parking assist apparatus 100, and a second mode selector switch (PW switch, PW: Power Window) for operating the second mode of executing opening and closing control of the door window opening and closing apparatus 300.

Next, the direction switches 101 - 104 will be explained. The input device 10B of the parking assist apparatus 100 of the present embodiment has a first direction switch (right front switch) 101 disposed at the right front, a second direction switch (left front switch) 102 disposed at the left front, a third direction switch (left rear switch) 103 disposed at the left rear, and a fourth direction switch (right rear switch) 104 disposed at the right rear, the switches being disposed on the operating surface S along a plane that has x and y components including the origin Q3 shown in Fig. 4. "The first direction switch (right front switch) 101 and the second direction switch (left front switch) 102" and "the third direction switch (left rear switch) 103 and the fourth direction switch (right rear switch) 104" are disposed to become a pair of right and left ones, and serve as right and left direction switches. Also, "the first direction switch (right front switch) 101 and the fourth direction switch (right rear switch) 104" and "the second direction switch (left front switch) 102 and the third direction switch (left rear switch) 103" are disposed to become a pair of front and rear ones, and serve as front and rear direction switches.

The direction switches 101 - 104 receive a right or left command indicating + x1 direction or - x1 direction of x and y components (x axis and y axis) including the origin Q3, or receive a front or rear command indicating + y direction or - y direction of x and y components (x axis and y axis) including the origin Q3.

More specifically, as shown in Fig. 4, the input device 10B of the present embodiment has four independent switches including the first switch (right front switch) 101 having a first contact point 101p provided in an area that corresponds to a first quadrant of the coordinate of x and y based on the origin Q3 along the operating surface S, the second switch (left front switch) 102 having a second contact point 102p provided in an area that corresponds to a second quadrant of the coordinate of x and y based on the origin Q3 along the operating surface S, the third switch (left rear switch) 103 having a third contact point 103p provided in an area that corresponds to a third quadrant of the coordinate of x and y based on the origin Q3 along the operating surface S, and the fourth switch (right rear switch) 104 having a fourth contact point 104p provided in an area that corresponds to a fourth quadrant of the coordinate of x and y based on the origin Q3 along the operating surface S. The contact point of only one of the first switch 104 - the third switch 104 receives an ON signal.

In the parking assist apparatus 100 of the present embodiment, when the right front switch 101 is operated, the parking direction is determined to be right and the parking arrangement of the vehicle is determined to be adjacent, so that the right adjacent parking pattern is selected. When the right rear switch 104 is operated, the parking direction is determined to be right and the parking arrangement of the vehicle is determined to be parallel, so that the right parallel parking pattern is selected. When the left front switch 102 is operated, the parking direction is determined to be left and the parking arrangement of the vehicle is determined to be adjacent, so that the left adjacent parking pattern is selected. When the left rear switch 103 is operated, the parking direction is determined to be left and the parking arrangement of the vehicle is determined to be parallel, so that the left parallel parking pattern is selected. Adjacent parking and parallel parking can be associated with the switches 101 - 104 in an opposite manner with respect to the front and rear. The selection results are transmitted to the parking assist apparatus 300.

Incidentally, the parking pattern of the present embodiment includes at least a right adjacent parking pattern for parking a vehicle in an area located on the right side of the vehicle so as to be laterally lined up with another parked vehicle (parking space), a left adjacent parking pattern for parking a vehicle in an area located on the left side of the vehicle so as to be laterally lined up with another parked vehicle (parking space), a right parallel parking pattern for parking a vehicle in an area located on the right side of the vehicle so as to be longitudinally lined up with another parked vehicle (parking space), and a left parallel parking pattern for parking a vehicle in an area located on the left side of the vehicle so as to be longitudinally lined up with another parked vehicle (parking space).

In this manner, the operations of the first switch 101 and the fourth switch 104 disposed on the right side with respect to the y axis passing through the origin Q3 are associated with the right parking pattern, and the operations of the second switch 102 and the third switch 103 disposed on the left side with respect to the y axis passing through the origin Q3 are associated with the left parking pattern. Accordingly, since the right and left directions of the parking pattern coincide with the right and left directions of the switch operation, the driver can intuitively associate the parking direction of the vehicle with the parking pattern. As a result of this, the driver can accurately select the parking pattern.

Also, the operations of the first switch 101 and the fourth switch 104 disposed on the right side with respect to the y axis passing through the origin Q3 are associated with the right parking pattern, and the operations of the second switch 102 and the third switch 103 disposed on the left side with respect to the y axis passing through the origin Q3 are associated with the left parking pattern. Accordingly, since the right and left direction of the parking pattern coincides with the right and left direction of the switch operation, the driver can intuitively associate the parking direction of the vehicle with the parking pattern. As a result of this, the driver can accurately select the parking pattern.

As described above, the adjacent parking pattern may be assigned or the parallel parking pattern may be assigned to the first switch 101 and the second switch 102 having the front contact points 101p, 102p. In order to allow the driver to observe which parking pattern is assigned to which direction switch, figures showing the position relation between the vehicle and the parking space can be displayed on the direction switches 101 - 104. For example, as shown in Fig. 4, a rectangle showing the vehicle on the left side (on the center side) and a rectangle showing the parking space lined up in a perpendicular direction on the right side of the vehicle are displayed on a pressed portion of the first direction switch 101. This display can visually show that the first direction switch 101 is associated with the right adjacent parking. Also, a rectangle showing the vehicle on the left side (on the center side) and a rectangle showing the parking space lined up in the same direction on the right side of the vehicle are displayed on a pressed portion of the fourth direction switch 104. This display can visually show that the fourth direction switch 104 is associated with the right parallel parking. Further, a rectangle showing the vehicle on the right side (on the center side) and a rectangle showing the parking space lined up in a perpendicular direction on the left side of the vehicle are displayed on a pressed portion of the second direction switch 102. This display can visually show that the second direction switch 102 is associated with the left adjacent parking. A similar display can be provided in the third direction switch 103. The display showing each parking pattern can be lighted up in operation of the first mode.

Further, the direction switches 101 - 104 of the present embodiment have first to fourth contact points 101p' - 104p' that receive PULL signals corresponding to pulling operations as well as the first to fourth contact points 101p - 104p that receive ON signals corresponding to pressing operations.

When the direction switches 101 - 104 are pulled up, it is determined that the driver selects a parking pattern for parking the vehicle in a small parking space (in which an adjustment operation is required for parking).

In this manner, when the direction switches 101 - 104 are pulled up, a parking pattern for parking the vehicle in a small parking space is associated, and when the direction switches 101 - 104 are pressed, a parking pattern for parking the vehicle in a large parking space is associated. Consequently, the contrasting spaces can be associated with the contrasting directions of the operations. Since the driver can intuitively associate the parking pattern for a large or small space with the operation direction of the switch (press or pull), the driver can accurately select the parking pattern.

On the other hand, in a case in which the second mode is selected to control the door window opening and closing apparatus 300, when either one of the first switch 101 and the second switch 102 or either one of the third switch 103 and the fourth switch 104, that correspond to the right and left direction switches disposed on the right and left as a pair, is operated, a right or left door window associated with the switch is determined as the operation target. When either one of the first switch 101 and the fourth switch 104 or either one of the second switch 102 and the third switch 103, that correspond to the front and rear direction switches disposed at the front and rear as a pair, is operated, an opening operation or a closing operation of the door window associated with the switch is determined as the content of the operation. The door window opening and closing apparatus 300 executes opening or closing of the door window determined as the operation target. Here, with respect to the drive control of the door mirror, a technique known at the time of filing the present application can be appropriately used.

The entry switch 31 is pressed to enter the content of a parking pattern selection signal or a door window opening and closing control signal based on each command input to the mode selector switches 21, 22 and the direction switches 101 - 104. The parking assist apparatus 100 executes a selection process of the parking pattern after the entry switch 31 is operated.

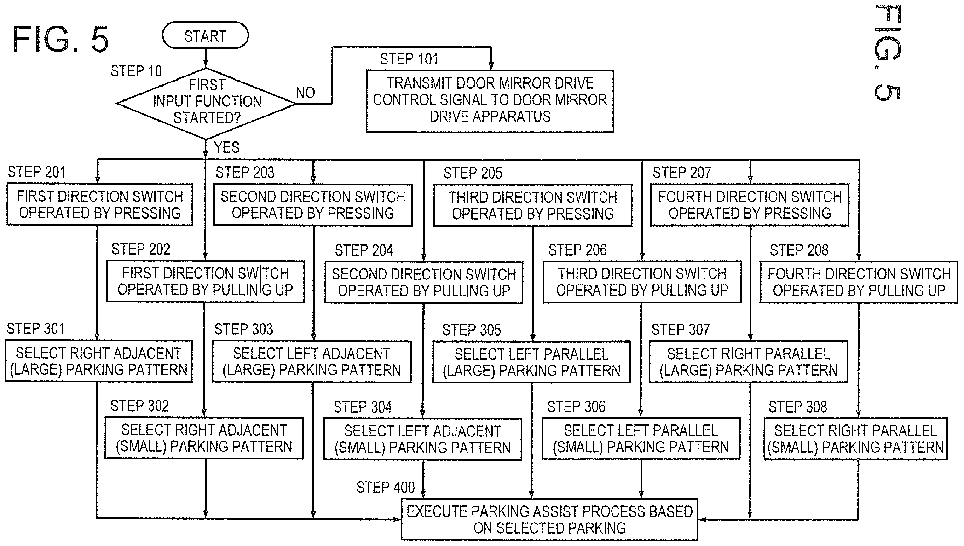

Next, a control procedure for the input device 10B of the parking assist apparatus 100 of the present embodiment will be explained with reference to the flow chart of Fig. 5.

First, in step 10, when the mode selector switch 21 that is an IPA switch is pressed, the first mode of executing the parking assist process is selected, and the process proceeds to step 201.

In step 201, in a case in which the first direction switch 101 is pressed, the process proceeds to step 301. In step 301, the parking assist apparatus 100 selects a right adjacent parking pattern in a parking space that is sufficiently large with respect to the size of the vehicle.

In step 202, in a case in which the first direction switch 101 is pulled up, the process proceeds to step 302. In step 302, the parking assist apparatus 100 selects a right adjacent parking pattern in a parking space that is small with respect to the size of the vehicle.

In step 203, in a case in which the second direction switch 102 is pressed, the process proceeds to step 303. In step 303, the parking assist apparatus 100 selects a left adjacent parking pattern in a parking space that is sufficiently large with respect to the size of the vehicle.

In step 204, in a case in which the second direction switch 102 is pulled up, the process proceeds to step 304. In step 304, the parking assist apparatus 100 selects a left adjacent parking pattern in a parking space that is small with respect to the size of the vehicle.

In step 205, in a case in which the third direction switch 103 is pressed, the process proceeds to step 305. In step 305, the parking assist apparatus 100 selects a left parallel parking pattern in a parking space that is sufficiently large with respect to the size of the vehicle.

In step 206, in a case in which the third direction switch 103 is pulled up, the process proceeds to step 306. In step 306, the parking assist apparatus 100 selects a left parallel parking pattern in a parking space that is small with respect to the size of the vehicle.

In step 207, in a case in which the fourth direction switch 104 is pressed, the process proceeds to step 307. In step 307, the parking assist apparatus 100 selects a right parallel parking pattern in a parking space that is sufficiently large with respect to the size of the vehicle.

In step 208, in a case in which the fourth direction switch 104 is pulled up, the process proceeds to step 308. In step 308, the parking assist apparatus 100 selects a right parallel parking pattern in a parking space that is small with respect to the size of the vehicle.

Finally, in step 400, the input device 100 transmits a parking pattern selection signal to the parking assist apparatus 100, and the parking assist apparatus 100 executes the parking assist process corresponding to the selected parking pattern.

Back to step 10, when the second mode is selected, a door mirror drive control signal received by the first to fourth direction switches 101 - 104 is transmitted to the door window opening and closing apparatus 300. The first to fourth direction switches 101 - 104 select a door mirror on the right or left or at the front or rear as the control target. The amount of pressing the first to fourth direction switches 101 - 104 selects an amount of lowering the raising and lowering type door window. The amount of pulling up the first to fourth direction switches 101 - 104 selects an amount of raising the raising and lowering type door window. A technique known at the time of filing the present application can be used for the door mirror drive mechanism and the door mirror drive method.

The input device 10B of the parking assist apparatus 100 of the present embodiment that is configured and operated as described above has the input device 10B provided with the direction switches 101 - 104 to receive a command to select a parking pattern including information regarding the direction such as adjacent parking to the right or left or parallel parking to the right or left with respect to the parking assist apparatus 100, and receive a command with respect to the door window opening and closing apparatus 300. Therefore, a parking pattern can be accurately selected even if the vehicle is not equipped with a touch panel display. Also, commands to a plurality of in-vehicle apparatuses can be received by the mode selector switches, and the existing switches of the vehicle can be shared as the switches for the parking assist apparatus. Therefore, there is no need to provide new switches only for the parking assist apparatus. As a result of this, the cost can be reduced in a case of installing the parking assist apparatus to a vehicle.

More specifically, in the input device 10B of the present embodiment, the existing switches of the vehicle such as the switches of the door window opening and closing apparatus 300 or the switches of other in-vehicle apparatuses can be shared as the switches for the parking assist apparatus 100. Therefore, there is no need to provide new switches only for the parking assist apparatus 100. As a result of this, since there is no need to change the design of the layout, the cost can be reduced in a case of installing the parking assist apparatus 100 to a vehicle. Also, the direction switches 101 - 104 are disposed on the right and left such that the right or left parking pattern associated with the position of the direction switches 101 - 104 can be selected in the first mode and the right or left door window associated with the position of the direction switches 101 - 104 can be selected in the second mode. Accordingly, the driver can intuitively associate the right and left parking patterns of the vehicle with the positions of the switches, and can associate the positions of the right and left door windows as the operation target with the positions of the switches. Therefore, the driver can accurately select the parking pattern. As a result of this, the parking assist apparatus 100 that can conduct input of high operability adapted to the sense or recognition of human beings can be provided.

Further, an ON signal received by the first contact point 101p or the fourth contact point 104p (right contact point) disposed on the right side with respect to the y axis passing through the origin Q3 is associated with the right parking pattern, and an ON signal received by the second contact point 102p or the third contact point 103p (left contact point) disposed on the left side with respect to the y axis passing through the origin Q3 is associated with the left parking pattern. Accordingly, the driver can intuitively associate the direction of the parking the vehicle with the parking pattern. Therefore, the driver can accurately select the parking pattern. In addition, an ON signal received by the first contact point 101p or the second contact point 102p (front contact point) disposed on the front side with respect to the x axis passing through the origin Q3 is associated with the adjacent parking pattern, and an ON signal received by the third contact point 103p or the fourth contact point 104p (rear contact point) disposed on the rear side with respect to the x axis passing through the origin Q3 is associated with the parallel parking pattern. In this manner, adjacent parking and parallel parking that are considered as contrasting concepts can be associated with the contrasting directions. Consequently, the driver can intuitively associate the adjacent parking pattern and the parallel parking pattern for parking the vehicle with the positions of the switches. As a result of this, the parking assist apparatus 100 that can conduct input of high operability adapted to the sense or recognition of human beings can be provided.

Here, all the embodiments explained heretofore are provided for better understanding of the present invention, and not for the purpose of limiting the present invention. Therefore, each component disclosed in the above-described embodiments should include all changes in design or equivalents that belong to the technical scope of the present invention.

In the present specification, as an embodiment of the parking assist apparatus 100 according to the present invention, the parking assist apparatus 100 provided with the input device 10A, 10B is illustrated. However, the present invention is not limited to this.

Also, in the present specification, the door mirror drive apparatus 200, the door window opening and closing apparatus 300, and the power seat drive apparatus are illustrated as in-vehicle apparatuses other than the parking assist apparatus 100. However, the present invention is not limited to this.

Also, in the present specification, as an embodiment of the parking assist apparatus according to the present invention provided with a mode selector switch and a direction switch, the parking assist apparatus 100 provided with the input device 10A having the mode selector switches 21, 22, the direction switches 11 - 16, and the entry switch 31, and the parking assist apparatus 100 provided with the input device 10B having the mode selector switches 21, 22, the first to fourth switches 101 - 104, and the entry switch 31 are illustrated. However, the present invention is not limited to this.

### KEY TO SYMBOLS

- 100: parking assist apparatus
- 10A, 10B: input device
- 21, 22: mode selector switch
- 11 - 16: direction switch (11, 12 ... right and left switch, 13, 14 ... front and rear switch)
- 11p - 16p: contact point
- 101 - 104: direction switch
- 101: first switch / right front switch
- 102: second switch / left front switch
- 103: third switch / left rear switch
- 104: fourth switch / right rear switch
- 101p - 104p, 101p' - 104p': contact point
- 31: entry switch
- S: operating surface
- Q, Q1, Q2, Q3: origin
- 200: door mirror drive apparatus
- 300: door window opening and closing apparatus

## Claims

1. A parking assist apparatus (100) comprising:
a mode selector switch (21, 22) for selecting a first mode of executing a parking assist function to a vehicle based on a prescribed parking mode or a second mode of executing a function of either driving a door mirror, or opening or closing a door window;
direction switches (11 to 16; 101 to 104) including a pair of right and left direction switches (11, 12; 101 to 104) disposed on the right and left and a pair of front and rear direction switches (13, 14; 101 to 104) disposed at the front and rear; and
a parking pattern selecting unit that determines a parking direction associated with the right or left position of the right and left direction switches (11, 12; 101 to 104) when one of the right and left direction switches (11, 12; 101 to 104) is operated and determines an arrangement of parking the vehicle that is adjacent parking or parallel parking associated with the front or rear position of the front and rear direction switches (13, 14; 101 to 104) when one of the front and rear direction switches (13, 14; 101 to 104) is operated so as to select a parking pattern based on the parking direction and the arrangement of parking the vehicle that have been determined in a case in which the first mode is selected.

2. The parking assist apparatus (100) according to claim 1, wherein
the direction switches (11 to 16) include a pair of right and left direction switches (11, 12) in which contact points are (11p, 12p) disposed on the right and left and a pair of front and rear direction switches (13, 14) in which contact points (13p, 14p) are disposed at the front and rear,
in a case in which the first mode is selected by operating the mode selector switch (21),
the parking pattern selecting unit determines that the parking direction is right when the right contact point (11p) of the right and left direction switches (11, 12) is operated, determines that the arrangement of parking the vehicle is adjacent when the front contact point (13p) of the front and rear direction switches (13,14) is operated, and selects a right adjacent parking pattern based on the right parking direction and the adjacent arrangement,
the parking pattern selecting unit determines that the parking direction is right when the right contact point (11p) of the right and left direction switches (11, 12) is operated, determines that the arrangement of parking the vehicle is parallel when the rear contact point (14p) of the front and rear direction switches (13, 14) is operated, and selects a right parallel parking pattern based on the right parking direction and the parallel arrangement,
the parking pattern selecting unit determines that the parking direction is left when the left contact point (12p) of the right and left direction switches (11, 12) is operated, determines that the arrangement of parking the vehicle is adjacent when the front contact point (13p) of the front and rear direction switches (13, 14) is operated, and selects a left adjacent parking pattern based on the left parking direction and the adjacent arrangement, and
the parking pattern selecting unit determines that the parking direction is left when the left contact point (12p) of the right and left direction switches (11, 12) is operated, determines that the arrangement of parking the vehicle is parallel when the rear contact point (14p) of the front and rear direction switches (13, 14) is operated, and selects a left parallel parking pattern based on the left parking direction and the parallel arrangement.

3. The parking assist apparatus (100) according to claim 1, wherein
the direction switches include a right front switch (101) disposed in a right front position with respect to a prescribed reference point (Q3), a right rear switch (104) disposed in a right rear position with respect to the prescribed reference point (Q3), a left front switch (102) disposed in a left front position with respect to the prescribed reference point (Q3), and a left rear switch (103) disposed in a left rear position with respect to the prescribed reference point (Q3),
in a case in which the first mode is selected by operating the mode selector switch (21),
the parking pattern selecting unit determines that the parking direction is right and the arrangement of parking the vehicle is adjacent and selects a right adjacent parking pattern when the right front switch (101) is operated,
the parking pattern selecting unit determines that the parking direction is right and the arrangement of parking the vehicle is parallel and selects a right parallel parking pattern when the right rear switch (104) is operated,
the parking pattern selecting unit determines that the parking direction is left and the arrangement of parking the vehicle is adjacent and selects a left adjacent parking pattern when the left front switch (102) is operated, and
the parking pattern selecting unit determines that the parking direction is left and the arrangement of parking the vehicle is parallel and selects a left parallel parking pattern when the left rear switch (103) is operated.

4. The parking assist apparatus (100) according to claim 1, comprising:
a mode selector switch (21, 22) for selecting a first mode of executing a parking assist function to a vehicle based on a prescribed parking mode or a second mode of executing a function of the vehicle other than the first mode;
direction switches including a right front switch (101) disposed in a right front position with respect to a prescribed reference point (Q3), a right rear switch (104) disposed in a right rear position with respect to the prescribed reference point (Q3), a left front switch (102) disposed in a left front position with respect to the prescribed reference point (Q3), and a left rear switch (103) disposed in a left rear position with respect to the prescribed reference point (Q3); and
a parking pattern selecting unit that determines a parking direction based on the right or left position of the direction switches (101 to 104) and determines an arrangement of parking the vehicle that is adjacent parking or parallel parking based on the front or rear position of the direction switches (101 to 106) so as to select a parking pattern based on the parking direction and the arrangement of parking the vehicle that have been determined in a case in which the first mode is selected, wherein
the parking pattern selecting unit selects a right adjacent parking pattern based on a determination that the parking direction is right and the arrangement of parking the vehicle is adjacent when the right front switch (101) is operated,
the parking pattern selecting unit selects a right parallel parking pattern based on a determination that the parking direction is right and the arrangement of parking the vehicle is parallel when the right rear switch (104) is operated,
the parking pattern selecting unit selects a left adjacent parking pattern based on a determination that the parking direction is left and the arrangement of parking the vehicle is adjacent when the left front switch (102) is operated, and
the parking pattern selecting unit selects a left parallel parking pattern based on a determination that the parking direction is left and the arrangement of parking the vehicle is parallel when the left rear switch (103) is operated.

5. The parking assist apparatus (100) according to any one of claims 1 to 4, wherein
the apparatus (100) further comprises a door mirror drive unit that determines a right or left operation target door mirror associated with the right or left position of the right and left direction switches (11, 12; 101 to 104) when one of the right and left direction switches (11, 12; 101 to 104) is operated and determines a driving direction to incline the door mirror forward or rearward associated with the front or rear position of the front and rear direction switches (13, 14; 101 to 104) when one of the front and rear direction switches (13, 14; 101 to 104) is operated so as to select the driving direction of the operation target door mirror in a case in which the second mode is selected by operating the mode selector switch (22), when the second mode executes a function of driving a door mirror of the vehicle.

6. The parking assist apparatus according to any one of claims 1 to 4, wherein
the apparatus further comprises a door window drive unit that determines a right or left operation target door window associated with the right or left position of the right and left direction switches (11, 12; 101 to 104) when one of the right and left direction switches (11, 12; 101 to 104) is operated and determines an opening operation or a closing operation of the door window associated with the front or rear position of the front and rear direction switches (13, 14; 101 to 104) when one of the front and rear direction switches is operated so as to select the opening operation or the closing operation of the operation target door window in a case in which the second mode is selected by operating the mode selector switch (22), when the second mode executes a function of opening or closing a door window of the vehicle.

## Patentansprüche

1. Parkhilfeeinrichtung (100), umfassend:
einen Modus-Auswahlschalter (21, 22) zum Auswählen eines ersten Modus zum Ausführen einer Parkhilfefunktion an einem Fahrzeug basierend auf einem vorgegebenen Parkmodus, oder eines zweiten Modus zum Ausführen einer Funktion entweder zum Antreiben eines Türspiegels oder zum Öffnen oder Schließen eines Türfensters;
Richtungsschalter (11 bis 16; 101 bis 104), die ein Paar von rechten und linken Richtungsschaltern (11, 12; 101 bis 104), die rechts und links angeordnet sind, und ein Paar von vorderen und hinteren Richtungsschaltern (13, 14; 101 bis 104) umfassen, die vorn und hinten angeordnet sind; und
eine Parkschema-Auswahleinheit, die eine Parkrichtung ermittelt, die der rechten oder linken Position der rechten und linken Richtungsschalter (11, 12; 101 bis 104) zugeordnet ist, wenn einer der rechten und linken Richtungsschalter (11, 12; 101 bis 104) betätigt ist, und eine Anordnung eines Parkplatzes des Fahrzeugs ermittelt, der ein angrenzender Parkplatz oder paralleler Parkplatz ist, welcher der vorderen und hinteren Position der vorderen und hinteren Richtungsschalter (13, 14; 101 bis 104) zugeordnet ist, wenn einer der vorderen und hinteren Richtungsschalter (13, 14; 101 bis 104) zum Auswählen eines Parkschemas basierend auf der Parkrichtung und der Anordnung eines Parkplatzes des Fahrzeugs betätigt ist, die in einem Fall ermittelt wurden, bei dem der erste Modus ausgewählt ist.

2. Parkhilfevorrichtung (100) nach Anspruch 1, wobei
die Richtungsschalter (11 bis 16) ein Paar von rechten und linken Richtungsschaltern (11, 12), in denen rechts und links Kontaktpunkte (11p, 12p) angeordnet sind, und ein Paar von vorderen und hinteren Richtungsschaltern (13, 14) umfassen, in denen vorn und hinten Kontaktpunkte (13p, 14p) angeordnet sind,
wobei in einem Fall, bei dem der erste Modus durch Betätigen des Modus-Auswahlschalters (21) gewählt ist,
die Parkschema-Auswahleinheit ermittelt, dass die Parkrichtung bei Betätigung des rechten Kontaktpunkts (11p) der rechten und linken Richtungsschalter (11, 12) rechts ist, ermittelt, dass die Anordnung eines Parkplatzes des Fahrzeugs bei Betätigung des vorderen Kontaktpunkts (13p) der vorderen und hinteren Richtungsschalter (13, 14) angrenzend ist, und ein rechtes angrenzendes Parkschema basierend auf der rechten Parkrichtung und der angrenzenden Anordnung auswählt,
die Parkschema-Auswahleinheit ermittelt, dass die Parkrichtung bei Betätigung des rechten Kontaktpunkts (11p) der rechten und linken Richtungsschalter (11, 12) rechts ist, ermittelt, dass die Anordnung eines Parkplatzes des Fahrzeugs bei Betätigung des hinteren Kontaktpunkts (14p) der vorderen und hinteren Richtungsschalter (13, 14) parallel ist, und ein rechtes paralleles Parkschema basierend auf der rechten Parkrichtung und der parallelen Anordnung auswählt,
die Parkschema-Auswahleinheit ermittelt, dass die Parkrichtung bei Betätigung des linken Kontaktpunkts (12p) der rechten und linken Richtungsschalter (11, 12) links ist, ermittelt, dass die Anordnung eines Parkplatzes des Fahrzeugs bei Betätigung des vorderen Kontaktpunkts (13p) der vorderen und hinteren Richtungsschalter (13, 14) angrenzend ist, und ein linkes angrenzendes Parkschema basierend auf der linken Parkrichtung und der angrenzenden Anordnung auswählt, und
die Parkschema-Auswahleinheit ermittelt, dass die Parkrichtung bei Betätigung des linken Kontaktpunkts (12p) der rechten und linken Richtungsschalter (11, 12) links ist, ermittelt, dass die Anordnung eines Parkplatzes des Fahrzeugs bei Betätigung des rechten Kontaktpunkts (14p) der vorderen und hinteren Richtungsschalter (13, 14) parallel ist, und ein linkes paralleles Parkschema basierend auf der linken Parkrichtung und der parallelen Anordnung auswählt.

3. Parkhilfevorrichtung (100) nach Anspruch 1, wobei
die Richtungsschalter einen rechten vorderen Schalter (101), der an einer rechten vorderen Position in Bezug auf einen vorgegebenen Referenzpunkt (Q3) angeordnet ist, einen rechten hinteren Schalter (104), der an einer rechten hinteren Position in Bezug auf den vorgegebenen Referenzpunkt (Q3) angeordnet ist, einen linken vorderen Schalter (102, der an einer linken vorderen Position in Bezug auf den vorgegebenen Referenzpunkt (Q3) angeordnet ist, und einen linken hinteren Schalter (103) umfassen, der an einer linken hinteren Position in Bezug auf den vorgegebenen Referenzpunkt (Q3) angeordnet ist,
wobei in einem Fall, bei dem der erste Modus durch Betätigen des Modus-Auswahlschalters (21) ausgewählt ist,
die Parkschema-Auswahleinheit ermittelt, dass die Parkrichtung rechts ist und die Anordnung eines Parkplatzes des Fahrzeugs angrenzend ist und ein rechtes angrenzendes Parkschema auswählt, wenn der rechte vordere Schalter (101) betätigt ist,
die Parkschema-Auswahleinheit ermittelt, dass die Parkrichtung rechts ist und die Anordnung eines Parkplatzes des Fahrzeugs parallel ist und ein rechtes paralleles Parkschema auswählt, wenn der rechte hintere Schalter (104) betätigt ist,
die Parkschema-Auswahleinheit ermittelt, dass die Parkrichtung links ist und die Anordnung eines Parkplatzes des Fahrzeugs angrenzend ist und ein linkes angrenzendes Parkschema auswählt, wenn der linke vordere Schalter (102) betätigt ist, und
die Parkschema-Auswahleinheit ermittelt, dass die Parkrichtung links ist und die Anordnung eines Parkplatzes des Fahrzeugs parallel ist, und ein paralleles Parkschema auswählt, wenn der linke hintere Schalter (103) betätigt ist.

4. Parkhilfevorrichtung (100) nach Anspruch 1, umfassend:
einen Modus-Auswahlschalter (21, 22) zum Auswählen eines ersten Modus zum Ausführen einer Parkhilfefunktion an einem Fahrzeug basierend auf einem vorgegebenen Parkmodus, oder eines zweiten Modus zum Ausführen einer Funktion des Fahrzeugs mit Ausnahme des ersten Modus;
Richtungsschalter, die einen rechten vorderen Schalter (101), der an einer rechten vorderen Position in Bezug auf einen vorgegebenen Referenzpunkt (Q3) angeordnet ist, einen rechten hinteren Schalter (104), der an einer rechten hinteren Position in Bezug auf den vorgegebenen Referenzpunkt (Q3) angeordnet ist, einen linken vorderen Schalter (102), der an einer linken vorderen Position in Bezug auf den vorgegebenen Referenzpunkt (Q3) angeordnet ist, und einen linken hinteren Schalter (103) umfassen, der an einer linken hinteren Position in Bezug auf den vorgegebenen Referenzpunkt (Q3) angeordnet ist; und
eine Parkschema-Auswahleinheit, die eine Parkrichtung basierend auf der rechten oder linken Position der Richtungsschalter (101 bis 104) ermittelt, und eine Anordnung eines Parkplatzes des Fahrzeugs, der ein angrenzender Parkplatz oder paralleler Parkplatz ist, basierend auf der vorderen oder hinteren Position der Richtungsschalter (101 bis 106) ermittelt, um ein Parkschema basierend auf der Parkrichtung und der Anordnung eines Parkplatzes des Fahrzeugs auszuwählen, die in einem Fall ermittelt wurden, bei dem der erste Modus ausgewählt ist, wobei
die Parkschema-Auswahleinheit ein rechts angrenzendes Parkschema basierend auf einer Ermittlung auswählt, dass die Parkrichtung rechts ist und die Anordnung eines Parkplatzes des Fahrzeugs angrenzend ist, wenn der rechte vordere Schalter (101) betätigt ist,
die Parkschema-Auswahleinheit ein rechtes paralleles Parkschema basierend auf einer Ermittlung auswählt, dass die Parkrichtung rechts ist und die Anordnung eines Parkplatzes des Fahrzeugs parallel ist, wenn der rechte hintere Schalter (104) betätigt ist,
die Parkschema-Auswahleinheit ein linkes angrenzendes Parkschema basierend auf einer Ermittlung auswählt, dass die Parkrichtung links ist und die Anordnung eines Parkplatzes des Fahrzeugs angrenzend ist, wenn der linke vordere Schalter (102) betätigt ist, und
die Parkschema-Auswahleinheit ein linkes paralleles Parkschema basierend auf einer Ermittlung auswählt, dass die Parkrichtung links ist und die Anordnung eines Parkplatzes des Fahrzeugs parallel ist, wenn der linke hintere Schalter (103) betätigt ist.

5. Parkhilfevorrichtung (100) nach einem der Ansprüche 1 bis 4, wobei
die Vorrichtung (100) ferner eine Türspiegel-Antriebseinheit aufweist, die einen rechten oder linken Betätigungsziel-Türspiegel ermittelt, welcher der rechten oder linken Position der rechten und linken Richtungsschalter (11, 12; 101 bis 104) zugeordnet ist, wenn einer der rechten und linken Richtungsschalter (11, 12; 101 bis 104) betätigt ist, und eine Antriebsrichtung zum Neigen des Türspiegels nach vorn oder hinten ermittelt, die der vorderen oder hinteren Position der vorderen und hinteren Richtungsschalter (11, 12; 101 bis 104) zugeordnet ist, wenn einer der vorderen und hinteren Richtungsschalter (13, 14; 101 bis 104) betätigt ist, um die Antriebsrichtung des Betätigungsziel-Türspiegels in einem Fall auszuwählen, bei dem der zweite Modus durch Betätigen des Modus-Auswahlschalters (22) ausgewählt ist, wenn der zweite Modus eine Funktion zum Antreiben eines Türspiegels des Fahrzeugs ausführt.

6. Parkhilfevorrichtung nach einem der Ansprüche 1 bis 4, wobei
die Vorrichtung ferner eine Türfenster-Antriebseinheit aufweist, die ein rechtes oder linkes Betätigungsziel-Türfenster ermittelt, das der rechten oder linken Position der rechten und linken Richtungsschalter (11, 12; 101 bis 104) zugeordnet ist, wenn einer der rechten und linken Richtungsschalter (11, 12; 101 bis 104) betätigt ist, und einen Öffnungsvorgang oder Schließvorgang des Türfensters ermittelt, das der vorderen oder hinteren Position der vorderen und hinteren Richtungsschalter (13, 14; 101 bis 104) zugeordnet ist, wenn einer der vorderen und hinteren Richtungsschalter betätigt ist, um den Öffnungsvorgang oder den Schließvorgang des Betätigungsziel-Türfensters in einem Fall auszuwählen, bei dem der zweite Modus durch Betätigen des Modus-Auswahlschalters (22) ausgewählt ist, wenn der zweite Modus eine Funktion zum Öffnen oder Schließen eines Türfensters des Fahrzeugs ausführt.

## Revendications

1. Appareil d'aide au stationnement (100) comprenant :
un commutateur de sélection de mode (21, 22) pour sélectionner un premier mode d'exécution d'une fonction d'aide au stationnement sur un véhicule sur la base d'un mode de stationnement prescrit ou un deuxième mode d'exécution d'une fonction qui consiste soit à entraîner un rétroviseur extérieur, soit à ouvrir ou à fermer une vitre de portière ;
des commutateurs de direction (11 à 16 ; 101 à 104) comportant une paire de commutateurs de direction droit et gauche (11, 12; 101 à 104) disposés à droite et à gauche et une paire de commutateurs de direction avant et arrière (13, 14 ; 101 à 104) disposés à l'avant et à l'arrière ; et
une unité de sélection de modèle de stationnement qui détermine une direction de stationnement associée à la position droite ou gauche des commutateurs de direction droit et gauche (11, 12 ; 101 à 104) lorsque l'un des commutateurs de direction droit et gauche (11, 12 ; 101 à 104) est actionné et détermine un agencement de stationnement du véhicule qui est un stationnement adjacent ou un stationnement parallèle associé à la position avant ou arrière des commutateurs de direction avant et arrière (13, 14 ; 101 à 104) lorsque l'un des commutateurs de direction avant et arrière (13, 14 ; 101 à 104) est actionné de manière à sélectionner un modèle de stationnement sur la base de la direction de stationnement et de l'agencement de stationnement du véhicule qui ont été déterminés dans un cas dans lequel le premier mode est sélectionné.

2. Appareil d'aide au stationnement (100) selon la revendication 1, dans lequel
les commutateurs de direction (11 à 16) comportent une paire de commutateurs de direction droit et gauche (11, 12) dans lesquels des points de contact (11p, 12p) sont disposés à droite et à gauche et une paire de commutateurs de direction avant et arrière (13, 14) dans lesquels des points de contact (13p, 14p) sont disposés à l'avant et à l'arrière,
dans un cas dans lequel le premier mode est sélectionné en actionnant le commutateur de sélection de mode (21),
l'unité de sélection de modèle de stationnement détermine que la direction de stationnement est droite lorsque le point de contact droit (11 p) des commutateurs de direction droit et gauche (11, 12) est actionné, détermine que l'agencement de stationnement du véhicule est adjacent lorsque le point de contact avant (13p) des commutateurs de direction avant et arrière (13, 14) est actionné, et sélectionne un modèle de stationnement adjacent droit sur la base de la direction de stationnement droite et de l'agencement adjacent,
l'unité de sélection de modèle de stationnement détermine que la direction de stationnement est droite lorsque le point de contact droit (11 p) des commutateurs de direction droit et gauche (11, 12) est actionné, détermine que l'agencement de stationnement du véhicule est parallèle lorsque le point de contact arrière (14p) des commutateurs de direction avant et arrière (13, 14) est actionné, et sélectionne un modèle de stationnement parallèle droit sur la base de la direction de stationnement droite et de l'agencement parallèle,
l'unité de sélection de modèle de stationnement détermine que la direction de stationnement est gauche lorsque le point de contact gauche (12p) des commutateurs de direction droit et gauche (11, 12) est actionné, détermine que l'agencement de stationnement du véhicule est adjacent lorsque le point de contact avant (13p) des commutateurs de direction avant et arrière (13, 14) est actionné, et sélectionne un modèle de stationnement adjacent gauche sur la base de la direction de stationnement gauche et de l'agencement adjacent, et
l'unité de sélection de modèle de stationnement détermine que la direction de stationnement est gauche lorsque le point de contact gauche (12p) des commutateurs de direction droit et gauche (11, 12) est actionné, détermine que l'agencement de stationnement du véhicule est parallèle lorsque le point de contact arrière (14p) des commutateurs de direction avant et arrière (13, 14) est actionné, et sélectionne un modèle de stationnement parallèle gauche sur la base de la direction de stationnement gauche et de l'agencement parallèle.

3. Appareil d'aide au stationnement (100) selon la revendication 1, dans lequel
les commutateurs de direction comportent un commutateur avant droit (101) disposé dans une position avant droite par rapport à un point de référence prescrit (Q3), un commutateur arrière droit (104) disposé dans une position arrière droite par rapport au point de référence prescrit (Q3), un commutateur avant gauche (102) disposé dans une position avant gauche par rapport au point de référence prescrit (Q3), et un commutateur arrière gauche (103) disposé dans une position arrière gauche par rapport au point de référence prescrit (Q3),
dans un cas dans lequel le premier mode est sélectionné en actionnant le commutateur de sélection de mode (21),
l'unité de sélection de modèle de stationnement détermine que la direction de stationnement est droite et que l'agencement de stationnement du véhicule est adjacent et sélectionne un modèle de stationnement adjacent droit lorsque le commutateur avant droit (101) est actionné,
l'unité de sélection de modèle de stationnement détermine que la direction de stationnement est droite et que l'agencement de stationnement du véhicule est parallèle et sélectionne un modèle de stationnement parallèle droit lorsque le commutateur arrière droit (104) est actionné,
l'unité de sélection de modèle de stationnement détermine que la direction de stationnement est gauche et que l'agencement de stationnement du véhicule est adjacent et sélectionne un modèle de stationnement adjacent gauche lorsque le commutateur avant gauche (102) est actionné, et
l'unité de sélection de modèle de stationnement détermine que la direction de stationnement est gauche et que l'agencement de stationnement du véhicule est parallèle et sélectionne un modèle de stationnement parallèle gauche lorsque le commutateur arrière gauche (103) est actionné.

4. Appareil d'aide au stationnement (100) selon la revendication 1, comprenant :
un commutateur de sélection de mode (21, 22) pour sélectionner un premier mode d'exécution d'une fonction d'aide au stationnement sur un véhicule sur la base d'un mode de stationnement prescrit ou un deuxième mode d'exécution d'une fonction du véhicule autre que le premier mode ;
des commutateurs de direction comportant un commutateur avant droit (101) disposé dans une position avant droite par rapport à un point de référence prescrit (Q3), un commutateur arrière droit (104) disposé dans une position arrière droite par rapport au point de référence prescrit (Q3), un commutateur avant gauche (102) disposé dans une position avant gauche par rapport au point de référence prescrit (Q3), et un commutateur arrière gauche (103) disposé dans une position arrière gauche par rapport au point de référence prescrit (Q3) ; et
une unité de sélection de modèle de stationnement qui détermine une direction de stationnement sur la base de la position droite ou gauche des commutateurs de direction (101 à 104) et détermine un agencement de stationnement du véhicule qui est un stationnement adjacent ou un stationnement parallèle sur la base de la position avant ou arrière des commutateurs de direction (101 à 106) de manière à sélectionner un modèle de stationnement sur la base de la direction de stationnement et de l'agencement de stationnement du véhicule qui ont été déterminés dans un cas dans lequel le premier mode est sélectionné, dans lequel
l'unité de sélection de modèle de stationnement sélectionne un modèle de stationnement adjacent droit sur la base d'une détermination selon laquelle la direction de stationnement est droite et l'agencement de stationnement du véhicule est adjacent lorsque le commutateur avant droit (101) est actionné,
l'unité de sélection de modèle de stationnement sélectionne un modèle de stationnement parallèle droit sur la base d'une détermination selon laquelle la direction de stationnement est droite et l'agencement de stationnement du véhicule est parallèle lorsque le commutateur arrière droit (104) est actionné,
l'unité de sélection de modèle de stationnement sélectionne un modèle de stationnement adjacent gauche sur la base d'une détermination selon laquelle la direction de stationnement est gauche et l'agencement de stationnement du véhicule est adjacent lorsque le commutateur avant gauche (102) est actionné, et
l'unité de sélection de modèle de stationnement sélectionne un modèle de stationnement parallèle gauche sur la base d'une détermination selon laquelle la direction de stationnement est gauche et l'agencement de stationnement du véhicule est parallèle lorsque le commutateur arrière gauche (103) est actionné.

5. Appareil d'aide au stationnement (100) selon l'une quelconque des revendications 1 à 4, dans lequel
l'appareil (100) comprend en outre une unité d'entraînement de rétroviseur extérieur qui détermine un rétroviseur extérieur cible d'opération droit ou gauche associé à la position droite ou gauche des commutateurs de direction droit et gauche (11, 12 ; 101 à 104) lorsque l'un des commutateurs de direction droit et gauche (11, 12 ; 101 à 104) est actionné et détermine une direction d'entraînement pour incliner le rétroviseur extérieur vers l'avant ou vers l'arrière associé à la position avant ou arrière des commutateurs de direction avant et arrière (13, 14 ; 101 à 104) lorsque l'un des commutateurs de direction avant et arrière (13, 14 ; 101 à 104) est actionné de manière à sélectionner la direction d'entraînement du rétroviseur extérieur cible d'opération dans un cas dans lequel le deuxième mode est sélectionné en actionnant le commutateur de sélection de mode (22), lorsque le deuxième mode exécute une fonction d'entraînement d'un rétroviseur extérieur du véhicule.

6. Appareil d'aide au stationnement selon l'une quelconque des revendications 1 à 4, dans lequel
l'appareil comprend en outre une unité d'entraînement de vitre de portière qui détermine une vitre de portière cible d'opération droite ou gauche associée à la position droite ou gauche des commutateurs de direction droit et gauche (11, 12 ; 101 à 104) lorsque l'un des commutateurs de direction droit et gauche (11, 12; 101 à 104) est actionné, et détermine une opération d'ouverture ou une opération de fermeture de la vitre de portière associée à la position avant ou arrière des commutateurs de direction avant et arrière (13, 14 ; 101 à 104) lorsque l'un des commutateurs de direction avant et arrière est actionné de manière à sélectionner l'opération d'ouverture ou l'opération de fermeture de la vitre de portière cible d'opération dans un cas dans lequel le deuxième mode est sélectionné en actionnant le commutateur de sélection de mode (22), lorsque le deuxième mode exécute une fonction d'ouverture ou de fermeture d'une vitre de portière du véhicule.
